# EUROPÄISCHE PATENTSCHRIFT

(11) **EP 2 263 073 B1**
(45) Veröffentlichungstag und Bekanntmachung des Hinweises auf die Patenterteilung: **14.01.2015**
(21) Anmeldenummer: 09726823.9
(22) Anmeldetag: 03.04.2009
(51) Int. Cl.: G01N 21/31, G01N 21/78, G01N 21/03

(54) **Modulares Absorptionsmesssystem**
Modular absorption measuring system
Système modulaire de mesure d'absorption

(30) Priorität: 04.04.2008 AT 5342008
(43) Veröffentlichungstag der Anmeldung: 22.12.2010
(73) Patentinhaber: ASMAG-Holding GmbH, 4645 Grünau im Almtal (AT)
(72) Erfinder: SONNLEITNER, Max, A-4040 Linz (AT)
(74) Vertreter: Burger, Hannes
(86) Internationale Anmeldenummer: PCT/AT2009/000134
(87) Internationale Veröffentlichungsnummer: WO 2009/121089

(56) Entgegenhaltungen:
- EP-A- 1 063 518
- US-A1- 2007 102 654
- MAO Y ET AL: "Efficient 4.2 [micro]m light emitting diodes for detecting CO2 at room temperature" ELECTRONICS LETTERS, IEE STEVENAGE, GB, Bd. 32, Nr. 5, 29. Februar 1996 (1996-02-29), Seiten 479-480, XP006004794 ISSN: 0013-5194

## Beschreibung

Die Erfindung betrifft ein modulares Absorptionsmesssystem für fluidale Medien umfassend ein Detektionsmodul und ein Probenmodul, wobei das Detektionsmodul ein Detektionssystem umfasst, wobei das Detektionssystem eine elektromagnetische Strahlungsquelle und einen Quantendetektor umfasst, wobei das Probenmodul eine Probenkammer aufweist, wobei die Strahlungsquelle zur Abgabe Licht in Richtung der Probenkammer und der Quantendetektor zur Aufnahme von Licht aus der Probenkammer ausgebildet sind.

Absorptionsmesssysteme werden bevorzugt überall dort eingesetzt, wo eine Änderung der Transparenz zur quantitativen Inhaltsbestimmung herangezogen werden kann. Beispielsweise lässt sich somit der Feinstoffgehalt in einer Flüssigkeit feststellen. Ebenso sind Absorptionsmesssysteme bekannt, bei denen ein Probenmaterial in eine Probenkammer eingefüllt wird und diese hernach in einer Messvorrichtung ausgewertet wird. Ebenso sind so genannte Messstreifen bekannt, bei denen ein Testabschnitt und zumeist auch ein Referenzabschnitt angebracht sind, wobei bei Kontakt dieser Abschnitte mit einer Probenflüssigkeit bzw. allgemein mit einer physikalisch/chemischen Probe, im Reaktionsabschnitt eine Reaktion stattfindet, die sich in einem Farbumschlag bzw. einer Änderung der Transparenz des Reaktionsabschnitts auswirkt.

Bei den bekannten Vorrichtungen besteht zudem meist das Problem, dass die Probenvorrichtung und die Auswertevorrichtung sehr genau relativ zueinander ausgerichtet werden müssen. Kleine Ausrichtungsungenauigkeiten können da zu größeren Unterschieden im erhaltenen Ergebnis führen, was die Qualität und Zuverlässigkeit von wiederholten Messungen bspw. bei einer kontinuierlichen Überwachungsaufgabe deutlich beeinträchtigt.

Die US 6,995,348 B2 zeigt bspw. ein optisches Erfassungssystem, bei dem ein Probenmaterial in einem Kanal an einer Mehrzahl optischer Erfassungsvorrichtungen vorbeigeführt wird. Jede optische Erfassungsvorrichtung ist dabei durch eine Lichtquelle und einen Detektor gebildet, die jeweils gegenüberliegend angeordnet sind, sodass das ausgesandte Licht den Kanal passiert und an der gegenüberliegenden Seite vom Detektor erfasst wird. Da die einzelnen Erfassungsvorrichtungen entlang eines Kanals angeordnet sind, ist die offenbarte Vorrichtung bspw. zur Bestimmung eines Reaktionsverlaufs entlang des Kanals ausgebildet. Durch die Anordnung frequenzselektiver Filter im Strahlengang jeder Erfassungsvorrichtung ist jedoch auch eine Analyse der Probe in unterschiedlichen Spektralbereichen möglich.

Da das Probenmaterial im Kanal alle Erfassungsvorrichtungen passiert, ist bspw. eine selektive Messung unter Einsatz eines Katalysators oder eines zugesetzten Reagents nicht möglich, da bei einer derartigen Messung die Probe durch den Einsatz des Zusatzstoffs verunreinigt wird und somit eine weitere Messung in einem anderen Spektralbereich bzw. mit einem anderen Katalysator üblicherweise nicht möglich ist.

Das Dokument US 2007/0102654 A1 offenbart einen optischen Sensor, der ein Erfassungsmodul aus einer Leuchtdiode und einen Photodetektor, jeweils aus einem organischen halbleitenden Material, umfasst. Das ausgesandte Licht durchtritt den Probenhalter und wird von der Photodiode erfasst. Es ist ferner offenbart, dass eine ökonomisch attraktive Alternative zu bestehenden Sensoren gefunden werden soll, was insbesondere durch einen integrierten Aufbau erreicht wird. Als integriert wird verstanden, dass der Sensor in einem Arbeitsschritt hergestellt wird, ohne dass Teile bzw. Komponenten des Sensors separat hergestellt werden, um anschließend zum Sensor zusammengefügt zu werden. Sowohl die OLED als auch die Photodiode können direkt auf einen Lichtleiter oder einem Trägermaterial hergestellt werden. Der optische Sensor umfasst zur Messung eines Referenzsignals eine Referenzphotodiode aus einem organischen Halbleitermaterial, welches Referenzsignal von der OLED bzw. einer zweiten Licht aussendenden Diode stammt. Diese Referenzdiode ist Teil eines Referenzmoduls, welches einen leeren Probenhalter aufweist, in dem kein Probenmaterial angeordnet ist, welcher Probenhalter aber vom Licht der selben Referenzdiode durchstrahlt wird, welche auch die Probenkammer und die Erfassungsphotodiode bestrahlt. Über einen Lichtleiter wird Licht von der OLED über den Probenhalter an die Photodiode geleitet und ggf. zusätzlich über den leeren Probenhalter geleitet. Ferner ist ein nicht-transparenter Schirm vorgesehen, welcher verhindern soll, dass Licht anders als durch die Probenkammer zum Photodetektor gelangt und somit eine Verfälschung des Messergebnisses verhindert wird. Ferner offenbart das Dokument ein Verfahren zur Herstellung eines optischen Sensors, wobei eine integrierte Anordnung der Photodioden und der OLEDs erreicht wird, indem diese am Erfassungsmodul angeordnet werden, wobei das Erfassungsmodul auch den Probenhalter aufweist.

Die Schrift EP 1 063 518 A2 offenbart eine Vorrichtung zur Analyse einer Gasprobe mittels Infrarotabsorption, bei der auf einem gemeinsamen, thermisch stabilisierten Träger, in unmittelbarer Nähe zueinander und auf einer Seite der Messzelle, ein Strahler und ein Empfänger angeordnet sind, wodurch die thermische Drift des Strahlers und des Empfängers unterbunden wird. Zur Analyse einer Gasprobe mittels Infrarotabsorption ist bekannt, dass zur Erreichung einer möglichst genauen Messung eine lange Absorptionsstrecke innerhalb der Messzelle von Vorteil ist. Ferner sind systematisch bedingte Schwankungen der Erfassungscharakteristik weitestgehend zu vermeiden. Dazu sind der Strahler und der Empfanger auf einem gemeinsamen, thermisch stabilisierten Träger in unmittelbarer Nähe zueinander und auf einer Seite der Messküvette angeordnet. Der Träger ist dabei ein thermisch stabilisiertes Metallelement, auf dem als Direktheizung zusätzlich ein Heiz- und Regelelement, beispielsweise ein Transistor, aufgebracht ist. Ferner ist ein IR-Bauelement, beispielsweise eine IR-Photodiode, in unmittelbarer Nähe zum Empfänger vorgesehen. Auf der dem Zellenfenster gegenüberliegenden Seite der Messzelle befindet sich ein sphärischer Spiegel, um die vom Strahler ausgesandte Strahlung zurück zur Photodiode zu lenken. Durch die Direktheizung ist es möglich, den Träger und damit den Strahler und den Empfänger auf einer Temperatur von vorzugsweise ca. 55°C konstant zu halten und somit eine thermisch bedingte Drift zu vermeiden.

Ferner ist aus dem Stand der Technik (z.B. Y. Mao und A. Krier, Electronics Letters, Vol. 32, S. 479-480, 1996) eine Leuchtdiode bekannt, welche im Bereich von 4,2µm Wellenlänge ihre maximale Strahlenintensität aufweist und somit bevorzugt zur Absorptionsmessung von CO2 einsetzbar ist.

Die Aufgabe der Erfindung liegt nun darin, eine Messvorrichtung zu schaffen, mit der es möglich ist, Inhaltsstoffe in einer Probe quantitativ bestimmen zu können. Die Aufgabe der Erfindung liegt des Weiteren darin, die Erfassungsvorrichtung derart modular auszubilden, dass eine individuelle Konfiguration hinsichtlich der Anzahl der gleichzeitig durchzuführenden Messungen und der Art der Messungen möglich ist. Die Konfiguration der Messvorrichtung soll möglichst fehlersicher durchführbar sein, wodurch eine möglichst hohe Messgenauigkeit, insbesondere eine hohe Wiederholgenauigkeit erreicht werden soll.

Die Aufgabe der Erfindung wird durch ein modulares Absorptionssystem gemäß Anspruch 1 gelöst.

Die Ausbildung der elektromagnetischen Strahlungsquelle als Elektrolumineszenzbauteil hat den Vorteil, dass derartige Bauteile besonders einfach herstellbar sind und gegenüber anderen Bauteilen eine deutlich höhere Lebensdauer aufweisen. Da das erfindungsgemäße Absorptionsmesssystem bevorzugt für den Einmalgebrauch ausgebildet ist, sind alle Komponenten auch im Hinblick auf die Entsorgung des Messsystems nach dem Gebrauch auszulegen. Bei bekannten Vorrichtungen wird die elektromagnetische Strahlungsquelle bevorzugt durch ein organisches Halbleiterbauteil gebildet, insbesondere durch eine OLED. Von organischen, licht abgebenden Halbleitermaterialien ist jedoch bekannt, dass sie eine technologisch bedingte kürzere Lebensdauer haben. Organische Leuchtdioden haben den weiteren Nachteil, dass die Verwendung an Lizenzgebühren gebunden ist, was in Hinblick auf ein möglichst kostengünstiges Absorptionssystem von Nachteil ist.

Erfindungsgemäß sind das Detektionsmodul und das Probenmodul zur dichten Anordnung aufeinander ausgebildet. Von wesentlicher Bedeutung des erfindungsgemäßen Absorptionssystem ist, dass zwei Module vorhanden sind, die getrennt und unabhängig voneinander hergestellt werden können und erst durch die Anordnung aufeinander zu einem einsatzbereiten Absorptionsmesssystem vervollständigt werden. Für die Ausbildung eines modularen Absorptionsmesssystems ist dies von ganz besonderer Bedeutung, denn dadurch lässt sich bspw. ein universelles Detektionsmodul mit einem, spezifisch an die zu testende Probe angepassten Probenmodul zu einem Messsystem zusammenfügen. Eine dichte Anordnung des Probenmoduls und das Detektionsmoduls aufeinander wird hier im Sinne von dicht bzgl. des fluidalen Mediums gesehen, wobei die Ausbildung des Detektions- und des Probenmoduls, insbesondere der einander zugewandten Flachseiten sicherstellt, dass es durch die Anordnung des Detektions- und Probenmoduls zu einer sicheren und zuverlässigen Abdichtung des fluidalen Mediums gegenüber der Umgebung kommt.

Die erfindungsgemäße Ausbildung hat den weiteren Vorteil, dass mit standardisierten Modulen ein beliebig komplexes und speziell auf die zu testenden Proben ausgebildetes Messsystem ausbildbar ist. Insbesondere ist es dem anwendenden Techniker dadurch möglich, das Messsystem vor Ort zu konfektionieren und genau auf die gestellte Messanforderung anpassen, ohne eine Vielzahl unterschiedlicher vorgefertigter Messsysteme mitführen zu müssen. Diese Einschränkung auf einige wenige Standardkomponenten hat auch im Hinblick auf die Kostensituation bei der Fertigung ganz entscheidende Vorteile, da die wenigen Komponenten in hoher Stückzahl und damit besonders kostengünstig hergestellt werden können. Erfindungsgemäß ist die Probenkammer als Vertiefung in einer Flachseite des Probenmoduls ausgebildet, was den Vorteil hat, dass diese Anordnung mittels formgebender Verfahren bei der Herstellung des Probenmoduls ausbildbar ist.

Im Probenmodul ist nach einer anspruchsgemäßen Weiterbildung eine Leitstruktur für fluide Medien vorhanden. Unter fluiden Medien werden alle jene Materialien verstanden, die sich durch eine Leitstruktur bspw. durch eine Röhrenanordnung transportieren bzw. bewegen lassen. Mitumfasst sind dabei insbesondere alle flüssigen Medien und auch gasförmige Medien, wobei das Material des Detektions- bzw. Probenmoduls zur Leitung dieser fluidalen Medien ausgebildet sein muss. Insbesondere darf es durch die Temperatur und die chemischen Eigenschaften des Mediums zu keiner schädlichen Beeinflussung des Materials des Detektions- und Probenmoduls kommen.

Da es sich bei den zu prüfenden Proben ggf. um gesundheitsgefährdendes Material handeln kann, wird ein Kontakt mit dem Probenmaterials jedenfalls zu vermeiden sein. Daher ist das Absorptionsmesssystem bevorzugt derart ausgebildet, dass die zu testende Probe von einer Abgabestelle mittels der Leitstruktur zum Bereich der Probenkammer geleitet wird und von dort wiederum abtransportiert wird. Aufgrund des modularen Aufbaus kann nun die Leitstruktur gezielt auf das zu transportierende Probenmaterial ausgebildet sein, insbesondere lassen sich gezielt die geometrischen Abmessungen der Leitstruktur auf die charakteristischen Eigenschaften des fluidalen Mediums anpassen.

Gemäß einer Weiterbildung ist das Leitsystem durch weitestgehend nutförmige Vertiefungen in einer Flachseite des Probenmoduls gebildet. Dies hat den ganz besonderen Vorteil, dass die Leitstruktur durch mechanische Formgebungsverfahren ausgebildet werden können. Bevorzugt wird das Probenmodul als Spritzgussteil ausgebildet sein, wodurch die Leitstruktur im Verfahrensschritt zur Herstellung des Probenmoduls ausgebildet werden kann. Insbesondere lässt sich somit kostengünstig ein universelles Probenmodul ausbilden, auf dem das Detektionsmodul angeordnet wird, wobei das Detektionsmodul ggf. spezifisch auf das zu prüfende Probenmaterial ausgebildet ist.

Diese vorteilhaften Weiterbildungen erlauben eine besonders kostengünstige und rationelle Herstellung des erfindungsgemäßen modularen Absorptionsmesssystems. Gegebenenfalls können jedoch zur detaillierteren Strukturierung weitere mechanische Bearbeitungsschritte eingesetzt werden, um so somit bspw. eine spezielle Leitstruktur ausbilden zu können.

Das erfindungsgemäße Absorptionsmesssystem basiert auf der Bestimmung einer Änderung der Transparenz eines fluidalen Mediums, um so den quantitativen Anteil eines bestimmten Stoffes im Medium ermitteln zu können. Gegebenenfalls ist jedoch eine direkte Bestimmung eines Inhaltsstoffes nicht möglich, da sich die Transparenz auch bei beliebig hoher Konzentration des Inhaltsstoffs nicht oder nur ungenügend ändern wird. Daher ist es von ganz besonderem Vorteil, wenn in der Probenkammer ein Reaktionsmaterial angeordnet ist. Durch dieses Reaktionsmaterial wird nun eine indirekte Bestimmung des quantitativen Vorkommens eines bestimmten Inhaltstoffes im fluidalen Medium möglich.

Das Reaktionsmaterial kann sowohl für eine Einmalmessung ausgebildet sein, es ist aber auch möglich, für eine bestimmte Zeitdauer, kontinuierlich Messungen durchzuführen. Beim ersten Typ wird das Reaktionsmaterial durch das Probenmaterial gelöst, so dass es durch die einmalige Messung aufgebraucht wird. Hier ist die Menge des Probenmaterials genau auf die Menge des Reaktionsmaterials abzustimmen. Das Reaktionsmaterial könnte aber auch derart gebildet sein, dass es beim Kontakt mit dem Probenmaterial nicht vollständig gelöst wird, sondern mit einer konstanten Rate bzw. bis zur Erreichung einer physikalisch/chemisch bedingten Konzentration in Lösung geht. Bei entsprechend dosierter Menge an Reaktionsmaterial ist somit über einen längeren Zeitraum eine Messung möglich.

In bekannten Vorrichtungen musste ein Reaktionsmaterial zumeist in flüssiger Form mittels eines aktiven Transportsystems in die Reaktionskammer eingebracht werden. Nun sind im Bereich der Mikrofluidik aktive Transportmittel wie Pumpen oder Ventile weiterhin kritisch im Hinblick auf ihre Störanfälligkeit. Daher ist eine anspruchsgemäße Weiterbildung von besonderem Vorteil, bei der das Reaktionsmaterial lyophilisiert ist, denn somit ist keine aktive Mikrofluidik erforderlich. Das lyophilisierte Reaktionsmaterial wird in der Probenkammer angeordnet und diese wird hernach dicht verschlossen. Vor Durchführung der Messung wird dieser Verschluss entfernt und das Probenmodul am Detektionsmodul angeordnet, wodurch das erfindungsgemäße modulare Absorptionsmesssystem einsatzbereit ist.

Durch die Anordnung eines Reaktionsmaterials in der Probenkammer erfolgt eine indirekte quantitative Bestimmung eines Stoffes im fluidalen Medium, da das Reaktionsmaterial anspruchsgemäß zur physikalisch chemisch Interaktion mit einem Inhaltsstoff des fluidalen Mediums ausgebildet ist. Beispielsweise kann das Reaktionsmaterial einen Stoff in das fluidale Medium freisetzen, der mit einem Inhaltsstoff interagiert und es somit zu einer Änderung der Transparenz des fluidalen Mediums kommt. Dem Fachmann sind dazu weitere Möglichkeiten bekannt, wie mittels eines Reaktionsmaterials eine physikalisch chemische Reaktion derart initiiert wird, dass es zur Änderung der Transparenz eines fluidalen Mediums kommt.

Die elektromagnetische Strahlungsquelle sendet Licht in Richtung der Probenkammer aus, welches vom Quantendetektor empfangen wird. Gegebenenfalls reicht die Lichtlenkung des fluidalen Mediums nicht aus, um das in die Probenkammer geleitete Licht derart weiterzuleiten, dass es vom Quantendetektor aufgenommen werden kann. Daher ist eine Weiterbildung von ganz entscheidendem Vorteil, bei der in der Probenkammer eine Lichtlenkeinrichtung angeordnet ist. Diese Lichtlenkeinrichtung leitet das in die Probenkammer eingestrahlte Licht gezielt um, insbesondere in Richtung der Längserstreckung der Probenkammer bzw. eines ggf. angeordneten Reaktionsmaterials. Das ggf. abgeschwächte Licht wird am gegenüber liegenden Ende der Probenkammer durch die Lichtlenkeinrichtung aus der Probenkammer in Richtung Quantendetektor umgelenkt. Diese Lichtlenkeinrichtung kann bspw. durch optische Reflektoren oder Beugungseinrichtungen gebildet sein.

Eine ganz besonders vorteilhafte Weiterbildung erhält man, wenn die Flachseite des Detektionsmoduls und/oder die Flachseite des Probenmoduls eine Haftschicht aufweist. Da das Detektionsmodul und das Probenmodul erfindungsgemäß aufeinander angeordnet werden, hat diese Ausbildung den Vorteil, dass durch Zusammenfügen der Flachseiten eine haftschlüssige Verbindung hergestellt wird und somit die beiden Module zum erfindungsgemäßen Absorptionsmesssystem zusammengefügt werden. Gegebenenfalls ist die Haftschicht derart ausgebildet, dass durch das Zusammenfügen eine untrennbare Verbindung der beiden Module ausgebildet wird. Die Haftschicht kann bspw. durch einen Haftvermittler wie einen Klebstoff gebildet sein. Es ist jedoch auch möglich, mittels eines Lösungsmittels die Flachseiten derart zu behandeln, dass es aufgrund der sich einstellenden Gefügeänderung bei der Anordnung der Module zu einer lokalen Verschmelzung der Materialien kommt.

Da das Detektions- bzw. Probenmodul bevorzugt aus einem Kunststoff gebildet ist, ist es in einer Weiterbildung auch möglich, die Module durch ein Bonding-Verfahren aufeinander anzuordnen. Dabei werden ohne Einsatz eines Haftvermittlers die Kontaktflächen thermisch derart behandelt, so dass es zu einer mikroskopischen Materialverschmelzung kommt. Nicht abschließend sind dem Fachmann sind unter anderem Ultraschall- und Laser-Bonding bekannt.

Es ist jedoch auf möglich, das Detektionsmodul folienartig auszubilden, so dass dieses ähnlich einer Klebefolie auf dem Probenmodul angeordnet werden kann.

Von Vorteil ist eine Ausbildung, bei der der Quantendetektor als Halbleiterbauteil ausgebildet ist, da sich Halbleiterbauteile besonders gut auf den zu erfassenden Spektralbereich anpassen lassen. Weiters lassen sich Halbleiterbauteile auch als aktive Bauteile ausbilden, sie liefern also bei Einwirken einer elektromagnetischen Strahlung bspw. aktiv ein elektrisches Ausgangssignal. In einer Weiterbildung könnten die Halbleiterbauteile auch durch organische Halbleiter gebildet sein. Halbleiter aus organischem halbleitendem Material haben zuletzt deutlich an Bedeutung gewonnen, da zur Herstellung derartiger Bauteile keine energieintensiven Prozesse wie bspw. Hochtemperatur-Hochvakuumkammern erforderlich sind und sich somit die Bauteile deutlich kostengünstiger und Umweltschonender herstellen lassen. Insbesondere eignen sich derartige Materialien zum Einsatz in Druckverfahren, wodurch sich Halbleiterbauteile besonderes rationell herstellen lassen.

Von besonderem Vorteil ist eine anspruchsgemäße Weiterbildung, bei der das Halbleiterbauteil als organisches Halbleiterbauteil gebildet ist. Das erfindungsgemäße Absorptionsmesssystem ist bevorzugt für den Einmalgebrauch ausgebildet und ist nach dem Gebrauch zu entsorgen. Auch liegt bei derartigen Einweg-Vorrichtungen ein Hauptaugenmerk auf den Stückkosten. Organische Halbleiter haben nun den ganz entscheidenden Vorteil, dass sie einerseits sehr kostengünstig herstellbar sind, bspw. durch Druckverfahren, und andererseits die Entsorgung keinen überdurchschnittlichen Aufwand zur Einhaltung von Umweltrichtlinien mit sich bringt. Mittels bekannter Verfahren wie bspw. Tintenstrahldruck, Siebdruck, Schablonendruck oder Tampondruck kann das Halbleiterbauteil ohne aufwändige Herstellungsschritte ausgebildet werden. Insbesondere sind keine Hochtemperatur- oder Hochvakuumprozesse erforderlich, wie dies bei der Herstellung anorganischer Halbleiter notwendig ist. Somit ist eine besonders kostengünstige Herstellung möglich, die Entsorgung bringt keine Umweltprobleme mit sich, was beides von ganz besonderem Vorteil für das Einweg- Absorptionsmesssystem ist.

Eine ganz besonders vorteilhafte Weiterbildung erhält man, wenn die Strahlungsquelle und/oder der Quantendetektor auf der ersten Flachseite des Detektionsmoduls aufgedruckt sind. Durch Druckverfahren aufbringbare Komponenten lassen sich besonders einfach und kostengünstig herstellen, insbesondere ist auch eine Anordnung nach Herstellung des Detektionsmoduls möglich. Beispielsweise wird das vorgefertigte Detektionsmodul in eine Druckanordnung eingelegt, die hernach die Strahlungsquelle und/oder den Quantendetektor aufdruckt. Als Druckverfahren eignen sich bspw. Siebdruck, Ink-Jet oder Stempeldruck, wobei dem Fachmann weitere Verfahren zum Drucken derartiger Bauteile bekannt sind.

Die Bestimmung der Änderung der Transparenz in einem fluidalen Medium beschränkt sich nicht nur auf den optisch sichtbaren Bereich, sondern umfasst den gesamten optischen Bereich. Auch ist es bspw. zur Erhöhung der Messgenauigkeit von Vorteil, wenn eine Transparenzänderung in mehr als einem Spektralbereich ermittelt werden kann. Anspruchsgemäß ist daher die Strahlungsquelle zur steuerbaren Abgabe von elektromagnetischer Strahlung in zumindest zwei Spektralbereichen ausgebildet, wobei der abdeckbare Spektralbereich insbesondere den gesamten optischen Bereich umfasst. Durch die anspruchsgemäße Ausbildung ist es nun möglich, eine Messung in einem ersten Spektralbereich durchzuführen, um dann die Strahlungsquelle derart anzusteuern, dass sie Licht in einem anderen Spektralbereich abgibt, in dem die Messung wiederholt wird. In einer Weiterbildung könnte die Strahlungsquelle auch derart ausgebildet sein, dass sie die zumindest zwei Spektralbereiche gleichzeitig abgeben kann. Der Quantendetektor ist jedenfalls in den Spektralbereichen fotosensitiv, in denen die Strahlungsquelle Licht abgeben kann.

Nach einer Weiterbildung ist das Detektionsmodul zumindest abschnittsweise transparent ausgebildet. Da das Detektionssystem bevorzugt auf der zweiten Flachseite des Detektionsmoduls angeordnet ist, die Strahlungsquelle somit ihr Licht durch das Detektionsmodul in Richtung der Probenkammer abgibt und vom Quantendetektor aus Richtung der Probenkammer empfangen wird, ist das Detektionsmodul in den Abschnitten, in denen Licht durchringen muss, anspruchsgemäß transparent ausgebildet. Dies kann bspw. dadurch ausgebildet sein, dass ein Licht leitendes Material bei der Fertigung des Detektionsmoduls an den relevanten Abschnitten angeordnet wird und hernach vom Material des umgebenden Detektionsmodul gehalten und fixiert wird. Beispielsweise kann das umgebende Material nicht transparent ausgeführt sein, was den Vorteil hat, dass eine Einstreuung von Fremdlicht in die Probenkammer und damit eine Verfälschung des Messergebnisses weitestgehend verhindert wird.

Durch die anspruchsgemäße Ausbildung, bei der die Leitstruktur zumindest eines aus der Gruppe Sammelleitung, Leitungsverzweigung, Transportkanal, Applikationsabschnitt aufweist, ist sichergestellt, dass eine zuverlässige Leitung des fluidalen Mediums im Absorptionsmesssystem erfolgt. Insbesondere in Hinblick auf einen modularen Aufbau und eine modularisierte Erweiterung ist diese Ausbildung von weiterem Vorteil, da universell ausgebildete Module beliebig aneinander gereiht werden können und durch die anspruchsgemäß ausgebildete Leitstruktur eine zuverlässige Verteilung des fluidalen Mediums erfolgt.

Im Hinblick auf einen kontinuierlichen Einsatz und insbesondere auf einen geringen Wartungsaufwand ist eine Ausbildung von Vorteil, bei der die Leitstruktur eine Kupplungsvorrichtung aufweist. Somit lässt sich das erfindungsgemäße Absorptionsmesssystem zur Durchführung der Messung einfach und schnell in eine bestehende Messvorrichtung einkoppeln und nach Durchführung der Messung bzw. nach Erreichen der zulässigen Betriebsdauer von diesem Abkoppeln und gegen ein neuwertiges bzw. aktualisiertes Absorptionsmesssystem ersetzen.

Zur gezielten Lenkung des Lichts von der Strahlungsquelle in die Probenkammer bzw. zur Lenkung des Lichts aus der Probenkammer in Richtung des Quantendetektors ist eine Ausbildung von Vorteil, bei der das Detektionsmodul eine Lichtlenkeinrichtung aufweist. Diese Lichtlenkeinrichtung ist bevorzugt derart ausgebildet, dass sie beim Anordnen des Detektionsmoduls am Probenmodul in die Probenkammer eingreift und sich somit der Austrittspunkt und damit die Strahlungsrichtung des Lichts gezielt festlegen lassen. Insbesondere ist somit eine besonders gute Ausleuchtung der Längsrichtung der Probenkammer möglich. Weiters ist auch eine besonders gute Erfassung und Weiterleitung des Lichts aus der Probenkammer hin zum Quantendetektor möglich.

Bei bekannten Messvorrichtungen bestand zumeist das Problem, dass die Probenvorrichtung und die Auswertevorrichtung relativ zueinander ausgerichtet werden mussten, was stets eine Fehlerquelle darstellte. In einer besonders vorteilhaften Weiterbildung weist das Probenmodul und/oder das Detektionsmodul eine kraft- und/oder formschlüssige Aufnahmevorrichtung auf. Durch diese Aufnahmevorrichtung ist sicher gestellt, dass bei der Anordnung des Detektionsmoduls am Probenmodul eine korrekte Ausrichtung hergestellt wird, insbesondere dass das Detektionssystem in Relation zur Probenkammer genau ausgerichtet wird. Diese Weiterbildung stellt somit insbesondere sicher, dass auch bei wiederholten Messungen die Abweichungen aufgrund Ungenauigkeiten bei der Positionierung des Detektionsmoduls am Probenmodul wesentlich verringert werden und somit das Messergebnis nicht wesentlich beeinflussen.

Zum besseren Verständnis der Erfindung wird diese anhand der nachfolgenden Figuren näher erläutert.

Es zeigen jeweils in stark schematisch vereinfachter Darstellung:
- Fig. 1: zeigt das erfindungsgemäße modulare Absorptionsmesssystem im angeordneten Zustand;
- Fig. 2: zeigt einen Schnitt durch das erfmdungsgemäße Absorptionsmesssystem;
- Fig. 3: zeigt einen Ansicht auf die Flachseiten des Detektions- und Probenmoduls;
- Fig. 4: a) und b) zeigen mögliche Ausbildungen einer Lichtlenkung durch die Probenkammer des Absorptionsmesssystems;
- Fig. 5: a) b) und c) zeigen weitere mögliche Ausbildungen des modularen Absorptionsmesssystems.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

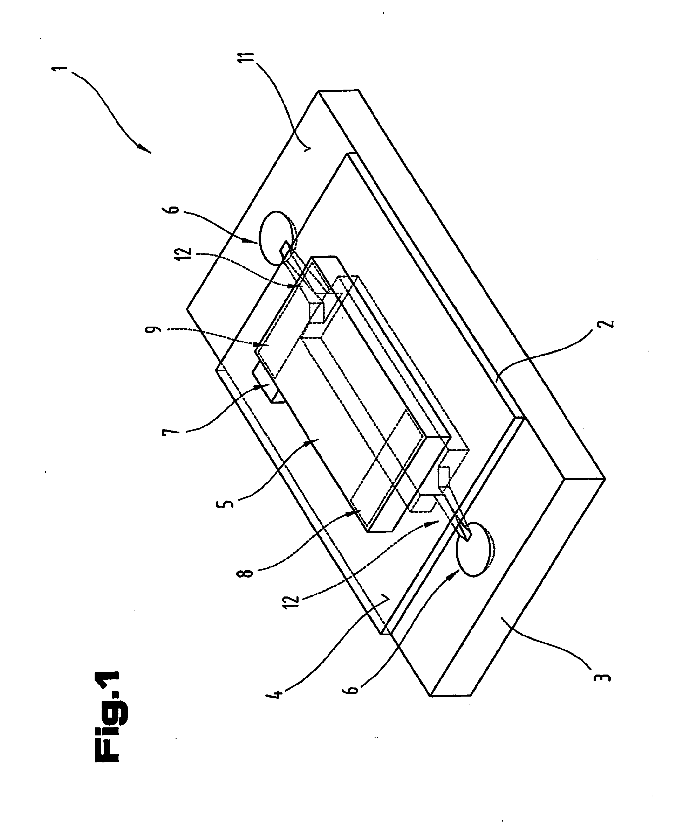

Fig. 1 zeigt eine perspektivische Darstellung des erfindungsgemäßen Absorptionsmesssystems 1, wobei das Detektionsmodul 2 und das Probenmodul 3 aufeinander angeordnet sind. Auf der zweiten Flachseite 4 ist das Detektionssystem 5 angeordnet, bevorzugt ist dieses aufgedruckt. Auf der Flachseite 11 des Probenmoduls 3 sind Kupplungsvorrichtungen 6 angeordnet, über die eine Übergabe des fluidalen Mediums an die Leitstruktur 12 des Absorptionsmesssystems und eine Übernahme des Mediums nach der Auswertung möglich ist. Die Kupplungsvorrichtungen 6 sind dabei derart ausgebildet, dass eine sehr einfache und schnelle Integration des erfindungsgemäßen Absorptionsmesssystems 1 in eine Testvorrichtung möglich ist. Insbesondere ist das Absorptionsmesssystem für den Einmalgebrauch ausgelegt, das nach einer bestimmten Betriebszeit, in der kontinuierlich Messungen durchgeführt wurden, ausgetauscht werden muss. Zur elektrischen Kontaktierung des Detektionssystems 5, ist zumeist noch ein elektrischer Kontaktanschluss 7 angeordnet. Das Detektionssystem 5 weist eine Strahlungsquelle 8 für elektromagnetische Strahlung und einen elektromagnetischen Quantendetektor 9 auf. Erfindungsgemäß ist die Strahlungsquelle 8 durch ein Elektrolumineszenzbauteil gebildet, welches den Vorteil einer sehr kostengünstigen Herstellung hat und sich insbesondere sehr gut an die Ausgestaltung der Strahlungsquelle anpassen lässt. Der Quantendetektor 9 ist bevorzugt durch ein organisches Halbleiterbauteil gebildet, bspw. durch einen Fotodetektor. Der Quantendetektor ist zumindest in jenem Spektralbereich fotosensitiv, in dem die Strahlungsquelle ihr Licht abgibt.

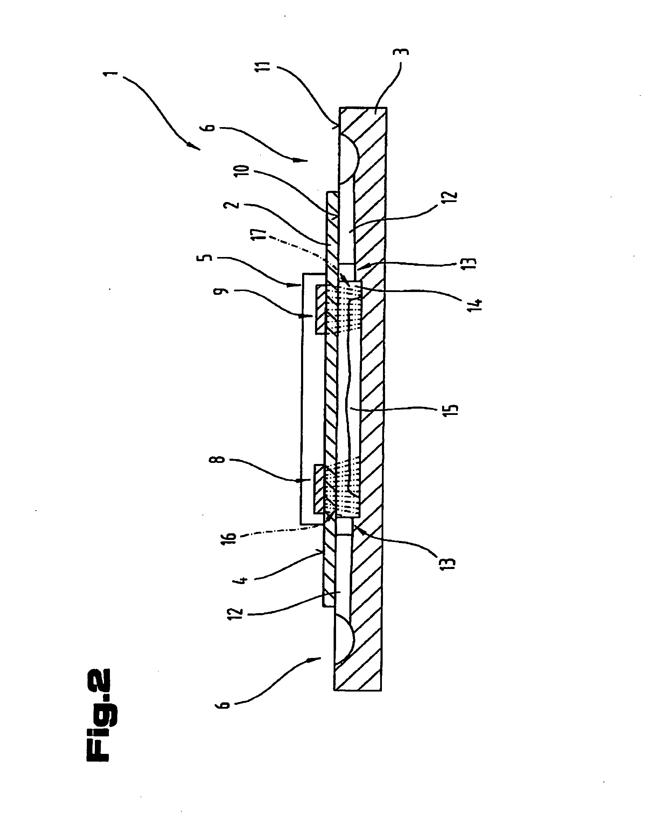

Erfindungsgemäß wird das Detektionsmodul 2 und das Probenmodul 3 aufeinander angeordnet, wobei erst durch diese Anordnung ein Kontakt der Leitstruktur mit der Probenkammer erfolgt. Die Anordnung ist derart ausgebildet ist, dass ein Austritt des fluidalen Mediums zuverlässig verhindert wird. Beispielsweise kann das Detektionsmodul 2 folienartig ausgebildet sein, das mittels eines Bonding-Verfahrens auf dem Probenmodul 3 angeordnet wird. Fig. 2 zeigt einen Schnitt durch das erfindungsgemäße modulare Absorptionsmesssystem 1. Deutlich erkennbar ist, dass das Detektionsmodul 2 mit seiner ersten Flachseite 10 auf der Flachseite 11 des Probenmoduls 3 angeordnet ist, wobei die Anordnung eine flüssigkeitsdichte Verbindung des Detektionsmoduls 2 und Probenmoduls 3 sicherstellt, insbesondere ist ein Austritt des fluidalen Mediums aus der Leitstruktur 12 in die Umgebung verhindert. Die Leitstruktur 12 ist nun derart ausgebildet, dass sie ein fluidales Medium, welches über die Kupplungsvorrichtung bzw. einen Applikationsbereich 6 abgegeben wird, im Probenmodul 3 derart weiterleitet, dass es in einem Übergabe- bzw. Übernahmeabschnitt 13 an die Probenkammer 14 übergeben wird bzw. von dieser übernommen wird. In der Probenkammer 14 ist ggf. noch ein Reaktionsmaterial 15 angeordnet, welches vom fluidalen Medium umströmt wird, wodurch es zu einer physikalisch chemischen Reaktion mit Stoffen im fluidalen Medium kommt. Gegebenenfalls kann das Reaktionsmaterial 15 auch Stoffe an das fluidale Medium abgeben, die ebenfalls wiederum mit Inhaltsstoffen reagieren. Die Strahlungsquelle 8 sendet Licht 16 in Richtung der Probenkammer 14 aus, wobei es ggf. in der Probenkammer 14 zu einer Abschwächung der Lichtintensität kommt. Das zurückkommende Licht 17 wird vom Quantendetektor 9 erfasst und bevorzugt in ein elektrisches Ausgangssignal umgewandelt. Das elektrische Ausgangssignal wird von einer Auswertevorrichtung dahingehend ausgewertet, dass eine Abschwächung einen Rückschluss auf die Menge eines Inhaltsstoffs im fluidalen Medium zulässt.

Das fluidale Medium wird bspw. am Applikationsabschnitt 6 an die Leitstruktur 12 übergeben, durchströmt die Leitstruktur 12 hin zur Probenkammer 14, durchläuft die Probenkammer, wobei es ggf. zu einer Reaktion mit dem Reaktionsmaterial 15 kommt, verlässt die Probenkammer wieder und wird über die Leitstruktur 12 an den Applikationsabschnitt 6 geleitet, wovon es bspw. in einem Auffangbehälter abgeleitet wird. Durch diese Anordnung ist das erfindungsgemäße Absorptionsmesssystem zur kontinuierlichen Erfassung der Absorptionswerte und damit zur quantitativen Bestimmung eines Inhaltsstoffs im fluidalen Medium ausgebildet.

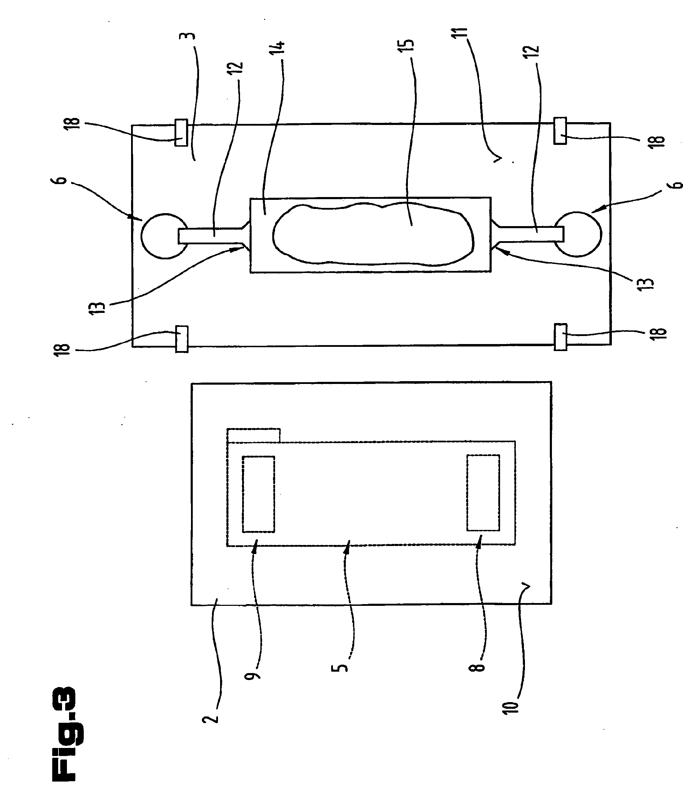

Fig. 3 zeigt das geöffnete modulare Absorptionsmesssystem mit einer Aufsicht auf die erste Flachseite 10 des Detektionsmoduls 2 und auf die Flachseite 11 des Probenmoduls 3. Die Leitstruktur 12 weist einen Übergabe bzw. Übernahmeabschnitt 13 auf, mit dem eine strömungsgünstige Überleitung bzw. Übernahme des fluiden Mediums von der Kupplungsvorrichtung bzw. Applikationsabschnitt 6 über die Leitstruktur 12 in die bzw. aus der Probenkammer 14 sichergestellt wird. Das Detektions- 2 und Probenmodul 3 ist dabei baulich derart ausgebildet, dass durch die Anordnung der beiden Module aufeinander, das Detektionssystem 5 exakt über der Probenkammer 14 angeordnet wird. Dazu können.am Probenmodul 3 eine Mehrzahl von Positionierhilfen 18 angeordnet sein, die bspw. eine formschlüssige Führung darstellen und eine exakte Ausrichtung des Detektionsmoduls 2 relativ zum Probenmodul 3 sicherstellen. Bevorzugt ist weiters auf der ersten Flachseite 10 des Detektionsmoduls 2 bzw. auf der Flachseite 11 des Probenmoduls 3 eine Haftschicht angeordnet, sodass bei der Anordnung der Module aufeinander, aufgrund der Haftwirkung eine schwer- bzw. untrennbare Verbindung erfolgt und insbesondere weiters eine Abdichtung der Leitstruktur 12 und der Probenkammer 14 gegen die Umgebung stattfindet. Beispielsweise ist es somit möglich, das Detektionsmodul 2 und das Probenmodul 3 getrennt voneinander herzustellen und auch getrennt dem Benutzer zur Verfügung zu stellen, wobei ggf. die angeordnete Haftschicht mit einer Schutzfolie abgedeckt ist. Erst beim tatsächlichen Einsatz werden die Schutzfolien abgezogen und die Module aufeinander angeordnet, wodurch ein einsatzbereites Absorptionsmesssystem gebildet wird. Die Abdeckung mit einer Schutzfolie hat den weiteren Vorteil, dass ein Probenmaterial 15 in der Probenkammer 14, sowie das Leitsystem 12, zuverlässig gegen Umwelteinflüsse geschützt bleibt, sodass es zu keinen, die Messung beeinflussenden bzw. verfälschenden Veränderung des Probenmaterials aufgrund der Umgebungseinflüsse kommen kann. Diese Ausbildung hat aber auch den Vorteil, dass mit einem universellen Detektionsmodul 2 und einer Mehrzahl unterschiedlicher Probenmodule 3, insbesondere unterschiedlich in Hinblick auf das Reaktionsmaterial 15, eine Vielzahl spezifischer Absorptionsmesssysteme ausbildbar sind.

Neben einer beschriebenen haftenden Verbindung der beiden Module 2, 3 ist jedoch auch eine Ausbildung denkbar, bei der bspw. die Positionierhilfen 18 derart ausgebildet sind, dass sie eine kraftschlüssige Anordnung der Module sicherstellen. Beispielsweise könnten die Positionierhilfen 18 so genannte Rastverbindungen aufweisen, die beim Anordnen des Detektionsmoduls 2 am Probenmodul 3 selbsttätig einrasten und die Anordnung dicht verriegeln.

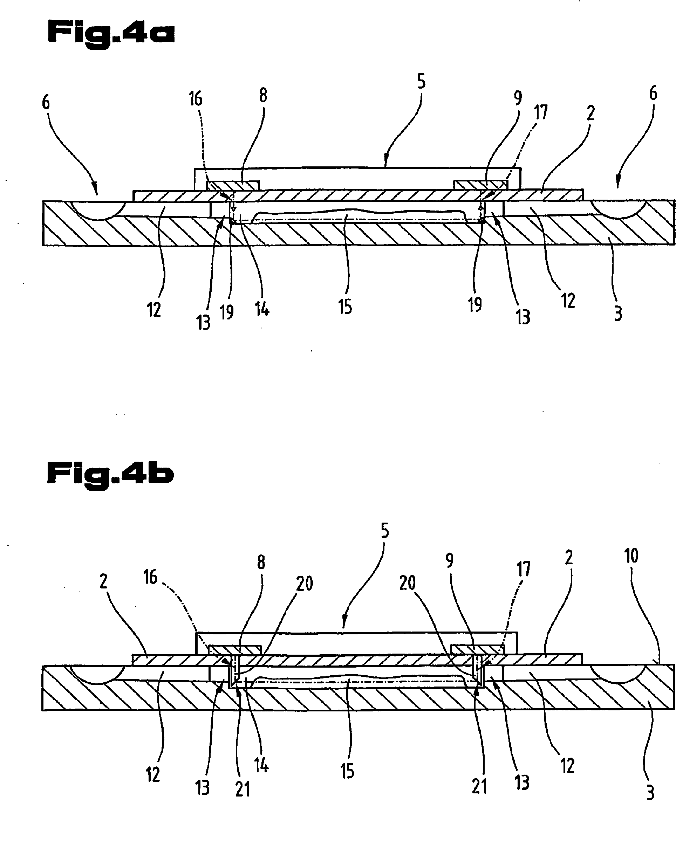

Die Fig. 4a und 4b zeigen mögliche Ausbildungen der Lichtlenkung durch die Probenkammer. In Fig. 4a sind in den Probenkammern 14 Lichtlenkelemente 19 angeordnet, die bspw. durch Miniaturspiegel gebildet sein können. In einer Weiterbildung ist es jedoch auch möglich, dass die Bewandung der Probenkammer 14 derart ausgebildet ist, bspw. durch eine Oberflächenbehandlung, dass dadurch eine Lichtlenkung erreicht wird. Die Lichtlenkelemente 19 haben nun den Vorteil, dass das eintreffende Licht 16 in Richtung der Probenkammer, insbesondere in Richtung der Längserstreckung der Probenkammer umgelenkt wird. Das ggf. abgeschwächte Licht 17 wird von dem weiteren Lichtlenkelement 19 wiederum in Richtung des Quantendetektors 9 umgelenkt.

Fig. 4b zeigt eine weitere Ausbildung einer Lichtlenkung in die Probenkammer. Dabei ist im Detektionsmodul 2, jeweils im Bereich der Strahlungsquelle 8 und des Quantendetektors 9, ein Lichtleiter 20 ausgebildet. In der Darstellung ragen die Lichtleiter 20 über die erste Flachseite 10 des Detektionsmoduls 2 hinaus, insbesondere ragen diese in die Probenkammer 14 hinein. Die Austrittsflächen 21 der Lichtleiter können bspw. derart ausgebildet sein, dass es aufgrund von Beugungseffekten zu einer Lichtlenkung in die Probenkammer 14 kommt. Die Abmessungen der Lichtleiter 20 in Relation zum Übergabe bzw. Überabnahmeabschnitt 13 ist derart gewählt, dass es zu keiner Verringerung des Querschnitts im Hinblick auf die Durchströmung des fluidalen Mediums kommt.

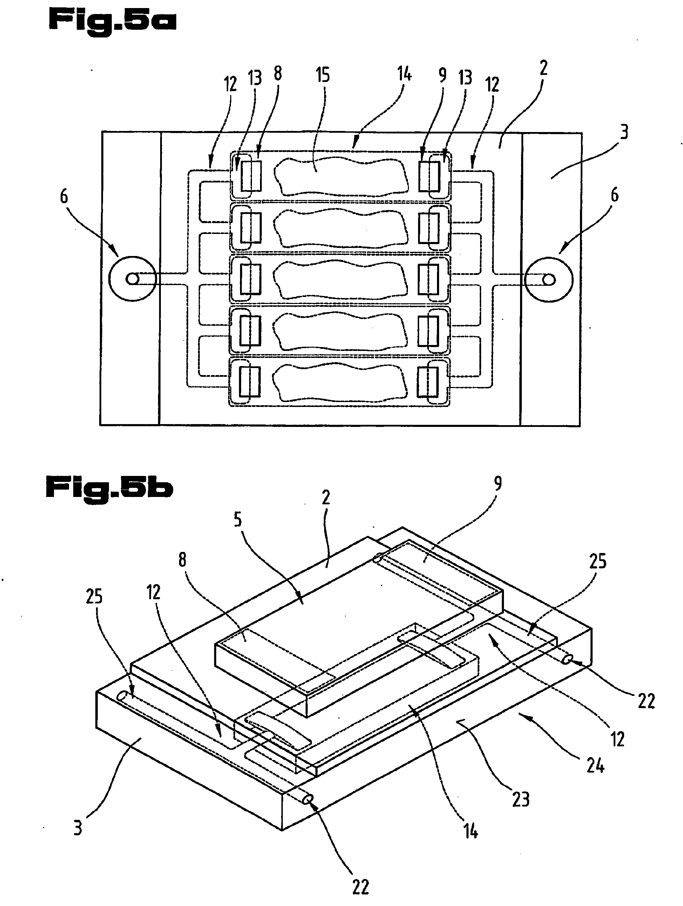

Die Fig. 5a zeigt eine weitere Ausbildung des erfindungsgemäßen Absorptionsmesssystems, bei dem eine Mehrzahl von Probenkammern 14 nebeneinander im Probenmodul angeordnet ist. Das Probenmodul 3 weist eine Mehrzahl von Verzweigungen und Leitungsstrukturen 12 auf, um das fluidale Medium von der Kupplungsvorrichtung bzw. vom Applikationsabschnitt 6 zu den einzelnen Probenkammern 14 zu transportieren bzw. von diesen abzutransportieren. Diese Ausbildung hat den ganz entscheidenden Vorteil, dass mit einem Absorptionsmesssystem gleichzeitig eine Mehrzahl unterschiedlicher Tests durchgeführt werden kann, wobei die zu testende Probe über einen Applikationsabschnitt und das Leitungssystem, an die einzelnen Testbereiche bzw. Probenkammern transportiert wird. Diese Ausbildung lässt sich beliebig erweitern, bspw. lässt sich somit ein Absorptionsmesssystem zur Wasseranalyse ausbilden das kontinuierlich und gleichzeitig siebzig unterschiedliche Probenwerte bestimmen kann.

Zur Bestimmung eines Referenzwerts und damit zur Kalibrierung des Absorptionsmesssystems ist es bspw. auch denkbar, dass in der Leitstruktur ein Referenzkanal vorhanden ist, der vom fluidalen Medium durchströmt wird, wobei es jedoch zu keiner Reaktion mit einem Reaktionsmaterial kommt. Diese Grundabschwächung des durchtretenden Lichtstrahls wird als Referenzwert für das Maß der Abschwächung in den weiteren Probenkammern herangezogen, wodurch sich kontinuierlich und insbesondere während laufender Messungen ein Referenzwert für die aktuell herrschende Grundabschwächung ermitteln lässt. Insbesondere lässt sich somit eine Änderung der Grundabschwächung feststellen, die unerkannt zu einer Verfälschung des Ergebnisses führen würde.

Fig. 5b zeigt nun eine weitere Ausbildung des erfindungsgemäßen Absorptionsmesssystems, das besonders auf einen modularen Aufbau hin ausgelegt wurde. Dabei ist die Leitstruktur 12 derart ausgebildet, dass sich der Zugang 22 zu einer Verteilleitung 25 der Leitstruktur 12 auf einer Seitenfläche 23 des Probenmoduls 3 angeordnet ist. Die Anordnung der Probenkammer 14 sowie des Detektionssystems 5 entspricht dabei denen der bisher beschriebenen Ausbildungen. Ein derart ausgebildetes Messmodul 24 lässt sich nun nahezu beliebig oft nebeneinander anordnen, wobei die Zugänge bzw. Anschlüsse 22 derart ausgebildet sind, dass durch Anordnung eines weiteren Messmoduls 24 eine dichte Verbindung ausgebildet wird. Gegebenenfalls könnte der Anschluss auch derart ausgebildet sein, dass die Leitstruktur 12 nach außen hin dicht abgeschlossen ist und erst durch die Anordnung eines weiteren Messmoduls die Verbindung hergestellt wird. Ebenfalls ist denkbar, dass auf der Seitenfläche 23 ein Haftmittel aufgebracht ist, welches bspw. durch eine Schutzfolie abgedeckt ist. Bei der Anordnung eines weiteren Messmoduls wird die Schutzfolie abgezogen, der Zugang bzw. Anschluss 22 zur Leitstruktur 12 damit freigeben und die Messmodule mittels einer haftenden Verbindung miteinander verbunden. Zur Versorgung bzw. zum Abtransport des fluidalen Mediums kann bspw. an einer beliebigen Stelle ein Versorgungsmodul angeordnet werden, welches eine Übergabe bzw. Übernahme des fluidalen Mediums an bzw. von der Leitstruktur ermöglicht.

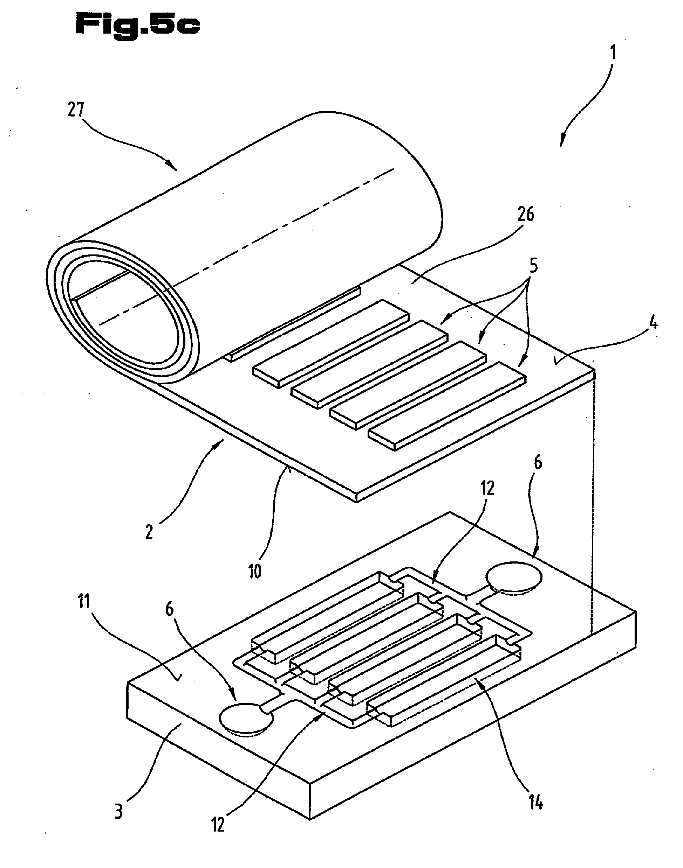

Fig. 5c zeigt eine weitere mögliche Ausbildung des erfindungsgemäßen Absorptionsmesssystems 1, bei der das Detektionsmodul 2 folienartig ausgebildet ist und auf dem Probenmodul 3 angeordnet wird bzw. mit diesem verbunden wird. Im Probenmodul 3 sind mehrere Probenkammern 14 vorhanden, die über eine Leitstruktur 12 mit einer Kupplungsvorrichtung bzw. einem Applikationsabschnitt 6 verbunden sind. In den Probenkammern 14 kann ggf. noch ein Reaktionsmaterial vorhanden sein. Gegebenenfalls kann auf der Flachseite 11 des Probenmoduls 3 eine Schutzfolie angeordnet sein, welche die Probenkammern 14, die Leitstruktur 12, sowie den Applikationsabschnitt 6 gegenüber Umwelteinflüssen abschließt und somit bis zum bestimmungsgemäßen Einsatz die Herstellungsbedingungen hinsichtlich Reinheit und Schutzatmosphäre aufrecht erhält.

Erfindungsgemäß umfasst das Detektionssystem 5 eine als Elektrolumineszenzbauteil ausgebildete elektromagnetische Strahlungsquelle. Gemäß einer vorteilhaften Weiterbildung ist der Quantendetektor als Halbleiterbauteil ausgebildet, wobei eine Ausbildung als organisches Halbleiterbauteil bevorzugt ist, sodass in besonders vorteilhafter Weise ein Aufdrucken auf eine Trägerlage möglich ist. Insbesondere haben organische Halbleiterbauteile sowie organische Elektrolumineszenzbauteile den besonderen Vorteil, dass sie flexibel sind, insbesondere sind sie elastisch rückstellbar verformbar. Daher lässt sich das Detektionssystem 5 auf eine flexible flächenhafte Trägerlage, bspw. ein Folienmaterial 26 mittels eines bekannten Druckverfahrens wie Tintenstrahldruck, Siebdruck, Stempeldruck aufdrucken, wobei dem Fachmann weitere mögliche Druckverfahren bekannt sind. Die Folie ist hinsichtlich ihrer mechanischen Eigenschaften derart ausgebildet, dass sie eine ausreichende Festigkeit aufweist, um die Detektionssysteme 5 zuverlässig tragen zu können und das weiters beim bestimmungsgemäßen Einsatz, insbesondere beim Kontakt mit den fluiden Medien, eine ausreichende mechanische Festigkeit sowie eine ausreichende chemische Beständigkeit gegeben ist. Das Probenmodul 3 lässt sich somit als so genannte Meterware herstellen, wobei auf der zweiten Flachseite 4 kontinuierlich und voneinander beabstandet Detektionssysteme 5 aufgebracht sind. Da das Folienmaterial 26 und die Detektionssysteme 5 flexibel ausgebildet sind, lässt sich die Folie aufwickeln und als Rollenware 27 zur Benutzung verbreiten. Bevorzugt ist auf der ersten Flachseite 10 eine Haftschicht aufgebracht und von einer Schutzfolie abgedeckt. Vor der Anordnung des Detektionsmoduls 2 auf dem Probenmodul 3, wird der erforderliche Abschnitt des Probenmoduls ermittelt und von der Rollenware 27 getrennt, insbesondere durch abschneiden. Durch Entfernen der Schutzfolie von der ersten Flachseite 10 des Detektionsmoduls 2 und der Flachseite 11 des Probenmoduls 3 können die beiden Module aufeinander angeordnet werden, wobei durch ggf. vorhandene Positionierhilfen eine exakte Ausrichtung der Detektionssysteme 5 über den Probenkammern 14 sichergestellt wird. Insbesondere wird durch diese Anordnung die Leitstruktur 12 sowie die Probenkammern 14 gegenüber der Umgebung abgedichtet und somit ein geschlossenes System hergestellt.

Diese Ausbildung hat daher den ganz besonderen Vorteil, dass ein universell gefertigtes Detektionsmodul 2, welches insbesondere unkonfektioniert als Rollenware 27 vorliegt, für eine Vielzahl unterschiedlich ausgebildeter Probenmodule 3 verwendbar ist. Die Ausbildung des Detektionsmoduls 2 als Folie mit aufgedruckten Detektionssystemen 5 hat den weiteren besonderen Vorteil, dass sich dieses besonders kostengünstig und rationell herstellen lässt und insbesondere gegenüber bekannten Vorrichtungen ein bedeutend geringere Problematik hinsichtlich der Umweltbelastung bei der Herstellung und Entsorgung mit sich bringt. Auch im Bezug auf die Handhabung für den Benutzer vor Ort hat die Ausbildung den Vorteil, dass sich für jeden Einsatzweck ein optimal angepasstes Absorptionsmesssystem 1 herstellen lässt, ohne dass eine Vielzahl unterschiedlich konfektionierter Messsysteme mitgeführt werden muss. Nach der Anordnung des Detektionsmoduls 2 am Probenmodul 3 werden die einzelnen Detektionssysteme 5 über Anschlussvorrichtungen, die ebenfalls bevorzugt aufgedruckt wurden, mit einer Auswertevorrichtung verbunden.

Die Ausbildung des Detektionsmoduls 2 als Rollenware 27 lässt sich selbstverständlich auch für alle zuvor beschriebenen Ausbildungen anwenden. Auch ist, wie bereits zuvor beschrieben, die Anordnung bzw. Verbindung des Detektionsmoduls 2 mit dem Probenmodul 3 durch andere als haftende Verfahren möglich, bspw. ist ein bereits genanntes Bonding-Verfahren denkbar. Mitumfasst sind diesbezüglich auch all jene Verfahren, die dem Fachmann zur Verbindung eines Folienmaterials mit einem Grundkörper bekannt sind.

Die Ausführungsbeispiele zeigen mögliche Ausführungsvarianten des modularen Absorptionsmesssystems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In der Fig. 4 und 5 ist eine weitere und gegebenenfalls für sich eigenständige Ausführungsform des modulares Absorptionsmesssystems gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Der Ordnung halber sei abschließend darauf hingewiesen, dass zum besseren Verständnis des Aufbaus des modularen Absorptionsmesssystems dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 5 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Absorptionsmesssystem
- 2: Detektionsmodul
- 3: Probenmodul
- 4: Zweite Flachseite
- 5: Detektionssystem

- 6: Kupplungsvorrichtung, Applikationsabschnitt
- 7: Kontakt, Anschluss
- 8: Elektromagnetische Strahlungsquelle
- 9: Quantendetektor
- 10: Erste Flachseite

- 11: Flachseite
- 12: Leitstruktur
- 13: Übergabe- bzw. Übernahmeabschnitt
- 14: Probenkammer
- 15: Reaktionsmaterial

- 16: Eingestrahltes Licht
- 17: Zurückkommendes Licht
- 18: Positionierhilfen
- 19: Lichtlenkelement
- 20: Lichtleiter

- 21: Austrittsflächen
- 22: Zugang, Anschluss
- 23: Seitenfläche
- 24: Messmodul
- 25: Verteilleitung

- 26: Folie
- 27: Rolle

## Patentansprüche

1. Modulares Absorptionsmesssystem (1) für fluide Medien umfassend ein Detektionsmodul (2) und ein Probenmodul (3), wobei das Detektionsmodul (2) ein Detektionssystem (5) umfasst, wobei das Detektionssystem (5) eine elektromagnetische Strahlungsquelle (8) und einen Quantendetektor (9) umfasst, wobei das Probenmodul (3) eine Probenkammer (14) aufweist, wobei die als Elektrolumineszenzbauteil ausgebildete Strahlungsquelle (8) zur Abgabe von Licht in Richtung der Probenkammer (14) und der Quantendetektor (9) zur Aufnahme von Licht aus der Probenkammer (14) ausgebildet sind, **dadurch gekennzeichnet, dass** das Detektionsmodul (2) und das Probenmodul (3) jeweils getrennt und unabhängig voneinander hergestellte Module sind und zur bezüglich des fluiden Mediums dichten Anordnung aufeinander ausgebildet sind und dass die Probenkammer (14) als Vertiefung in einer Flachseite (11) des Probenmoduls (3) ausgebildet ist.

2. Modulares Absorptionsmesssystem nach Anspruch 1, **dadurch gekennzeichnet,**
**dass** das Probenmodul (3) eine Leitstruktur (12) für fluide Medien aufweist.

3. Modulares Absorptionsmesssystem nach Anspruch 2, **dadurch gekennzeichnet,**
**dass** die Leitstruktur (12) durch weitestgehend nutförmige Vertiefungen in der Flachseite (11) des Probenmoduls (3) gebildet ist

4. Modulares Absorptionsmesssystem nach einem der Ansprüche 1 bis 3, **dadurch gekennzeichnet, dass** in der Probenkammer (14) ein Reaktionsmaterial (15) angeordnet ist.

5. Modulares Absorptionsmesssystem nach Anspruch 4, **dadurch gekennzeichnet,**
**dass** das Reaktionsmaterial (15) lyophilisiert ausgebildet ist.

6. Modulares Absorptionsmesssystem nach einem der Ansprüche 4 oder 5, **dadurch gekennzeichnet, dass** das Reaktionsmaterial (15) zur physikalisch/chemischen Interaktion mit einem Inhaltsstoff des fluidialen Mediums ausgebildet ist

7. Modulares Absorptionsmesssystem nach einem der Ansprüche 1 bis 6, **dadurch gekennzeichnet, dass** in der Probenkammer (14) eine Licht-Lenkeinrichtung (19) angeordnet ist.

8. Modulares Absorptionsmesssystem nach einem der Ansprüche 1 bis 7, **dadurch gekennzeichnet, dass** eine erste Flachseite (10) des Detektionsmoduls (2) und/oder die Flachseite (11) des Probenmoduls (3) eine Haftschicht aufweist.

9. Modulares Absorptionsmesssystem nach einem der Ansprüche 1 bis 8, **dadurch gekennzeichnet, dass** der Quantendetektor (9) als Halbleiterbauteil ausgebildet ist.

10. Modulares Absorptionsmesssystem nach Anspruch 9, **dadurch gekennzeichnet, dass** das Halbleiterbauteil als organisches Halbleiterbauteil gebildet ist.

11. Modulares Absorptionsmesssystem nach einem der Ansprüche 1 bis 10, **dadurch gekennzeichnet, dass** die Strahlungsquelle (8) und/oder der Quantendetektor (9) auf einer zweiten Flachseite (4) des Detektionsmoduls (2) aufgedruckt sind.

12. Modulares Absorptionsmesssystem nach einem der Ansprüche 1 bis 11, **dadurch gekennzeichnet, dass** die Strahlungsquelle (8) steuerbar zur Abgabe elektromagnetischer Strahlung in zumindest zwei Spektralbereichen ausgebildet ist.

13. Modulares Absorptionsmesssystem nach einem der Ansprüche 1 bis 12, **dadurch gekennzeichnet, dass** das Detektionsmodul (2) zumindest abschnittsweise transparent ausgebildet ist.

14. Modulares Absorptionsmesssystem nach einem der Ansprüche 2 bis 13, **dadurch gekennzeichnet, dass** die Leitstruktur zumindest eines der Gruppe Sammelleitung, Leitungsverzweigung, Transportkanal, Applikationsabschnitt aufweist.

15. Modulares Absorptionsmesssystem nach einem der Ansprüche 2 bis 14, **dadurch gekennzeichnet, dass** die Leitstruktur (12) eine Kupplungsvorrichtung (6) aufweist.

16. Modulares Absorptionsmesssystem nach einem der Ansprüche 1 bis 15, **dadurch gekennzeichnet, dass** das Detektionsmodul (3) eine Lichtlenkeinrichtung (20) aufweist

17. Modulares Absorptionsmesssystem nach einem der Ansprüche 1 bis 16, **dadurch gekennzeichnet, dass** das Probenmodul (3) und/oder das Detektionsmodul (2) eine kraft- und/oder formschlüssige Aufnahmevorrichtung aufweisen.

## Claims

1. Modular absorption measuring system (1) for fluid media comprising a detection module (2) and a sample module (3), wherein the detection module (2) comprises a detection system (5), wherein the detection system (5) comprises an electromagnetic radiation source (8) and a quantum detector (9), wherein the sample module (3) comprises a sample chamber (14), wherein the radiation source (8) in the form of an electroluminescence component is designed for emitting light in the direction of the sample chamber (14) and the quantum detector (9) is designed for receiving light from the sample chamber (14), **characterised in that** the detection module (2) and the sample module (3) are made respectively as separate and independent modules designed to be disposed one on top of the other in a sealed arrangement with respect to the fluid medium, and **in that** the sample chamber (14) is designed as a depression in a flat side (11) of the sample module (3).

2. Modular absorption measuring system according to claim 1, **characterised in that** the sample module (3) comprises a lead structure (12) for fluid media.

3. Modular absorption measuring system according to claim 2, **characterised in that** the lead structure (12) is formed as far as possible by groove-like depressions in the flat side (11) of the sample module (3).

4. Modular absorption measuring system according to one of claims 1 to 3, **characterised in that** a reaction material (15) is arranged in the sample chamber (14).

5. Modular absorption measuring system according to claim 4, **characterised in that** the reaction material (15) is designed to be freeze-dried.

6. Modular absorption measuring system according to one of claims 4 or 5, **characterised in that** the reaction material (15) is designed for physical/chemical interaction with a substance contained in the fluid medium.

7. Modular absorption measuring system according to one of claims 1 to 6, **characterised in that** a light guiding device (19) is arranged in the sample chamber (14).

8. Modular absorption measuring system according to one of claims 1 to 7, **characterised in that** a first flat side (10) of the detection module (2) and/or the flat side (11) of the sample module (3) comprises an adhesive layer.

9. Modular absorption measuring system according to one of claims 1 to 8, **characterised in that** the quantum detector (9) is designed as a semiconductor component.

10. Modular absorption measuring system according to claim 9, **characterised in that** the semiconductor component is designed as an organic semiconductor component.

11. Modular absorption measuring system according to one of claims 1 to 10, **characterised in that** the radiation source (8) and/or the quantum detector (9) are imprinted on a second flat side (4) of the detection module (2).

12. Modular absorption measuring system according to one of claims 1 to 11, **characterised in that** the radiation source (8) is designed to be controllable for emitting electromagnetic radiation in at least two spectral ranges.

13. Modular absorption measuring system according to one of claims 1 to 12, **characterised in that** the detection module (2) is designed to be transparent at least in sections.

14. Modular absorption measuring system according to one of claims 2 to 13, **characterised in that** the lead structure comprises at least one structure from a group comprising a collective line, line branching, transport channel, application section.

15. Modular absorption measuring system according to one of claims 2 to 14, **characterised in that** the lead structure (12) comprises a coupling device (6).

16. Modular absorption measuring system according to one of claims 1 to 15, **characterised in that** the detection module (3) comprises a light-directing device (20) .

17. Modular absorption measuring system according to one of claims 1 to 16, **characterised in that** the sample module (3) and/or the detection module (2) comprises a force-closed and/or form-closed receiving device.

## Revendications

1. Système de mesure d'absorption modulaire (1) pour des milieux fluide, comprenant un module de détection (2) et un module d'échantillon (3), le module de détection (2) comprenant un système de détection (5), le système de détection (5) comprenant une source de rayonnement électromagnétique (8) et un détecteur quantique (9), le module d'échantillon (3) comprenant une chambre à échantillon (14), la source de rayonnement (8), conçue comme un composant électroluminescent, étant conçue pour émettre de la lumière en direction de chambre à échantillon (14) et le détecteur quantique (9) étant conçu pour capter la lumière provenant de la chambre à échantillon (14), **caractérisé en ce que** le module de détection (2) et le module d'échantillon (3) sont des modules séparés et indépendants l'un de l'autre et sont disposés l'un sur l'autre de manière étanche par rapport au milieu fluide et **en ce que** la chambre à échantillon (14) est conçue comme un évidement sur le côté plat (11) du module d'échantillon (3).

2. Système de mesure d'absorption modulaire selon la revendication 1, **caractérisé en ce que** le module d'échantillon (3) comprend une structure de guidage (12) pour des milieux fluides.

3. Système de mesure d'absorption modulaire selon la revendication 2, **caractérisé en ce que** la structure de guidage (12) est constituée d'évidements en forme de rainures sur le côté plat (11) du module d'échantillon (3).

4. Système de mesure d'absorption modulaire selon l'une des revendications 1 à 3, **caractérisé en ce que**, dans la chambre à échantillon (14), se trouve un matériau de réaction (15).

5. Système de mesure d'absorption modulaire selon la revendication 4, **caractérisé en ce que** le matériau de réaction (15) est lyophilisé.

6. Système de mesure d'absorption modulaire selon l'une des revendications 4 ou 5, **caractérisé en ce que** le matériau de réaction (15) est conçu pour une interaction physique/chimique avec un composant du milieu fluide.

7. Système de mesure d'absorption modulaire selon l'une des revendications 1 à 6, **caractérisé en ce que**, dans la chambre à échantillon (14), se trouve un dispositif de guidage de la lumière (19).

8. Système de mesure d'absorption modulaire selon l'une des revendications 1 à 7, **caractérisé en ce qu'**un premier côté plat (10) du module de détection (2) et/ou le côté plat (11) du module à échantillon (3) comprend une couche adhésive.

9. Système de mesure d'absorption modulaire selon l'une des revendications 1 à 8, **caractérisé en ce que** le détecteur quantique (9) est conçu comme un composant à semi-conducteur.

10. Système de mesure d'absorption modulaire selon la revendication 9, **caractérisé en ce que** le composant à semi-conducteur est conçu comme un composant à semi-conducteur organique.

11. Système de mesure d'absorption modulaire selon l'une des revendications 1 à 10, **caractérisé en ce que** la source de rayonnement (8) et/ou le détecteur quantique (9) sont imprimés sur un deuxième côté plat (4) du module de détection (2).

12. Système de mesure d'absorption modulaire selon l'une des revendications 1 à 11, **caractérisé en ce que** la source de rayonnement (8) est conçue de façon à être contrôlable pour émettre un rayonnement électromagnétique dans au moins deux gammes spectrales.

13. Système de mesure d'absorption modulaire selon l'une des revendications 1 à 12, **caractérisé en ce que** le module de détection (2) est au moins partiellement transparent.

14. Système de mesure d'absorption modulaire selon l'une des revendications 2 à 13, **caractérisé en ce que** la structure de guidage comprend au moins un des éléments suivants : collecteur, embranchement, canal de transport, section d'application.

15. Système de mesure d'absorption modulaire selon l'une des revendications 2 à 14, **caractérisé en ce que** la structure de guidage (12) comprend un dispositif de couplage (6).

16. Système de mesure d'absorption modulaire selon l'une des revendications 1 à 15, **caractérisé en ce que** le module de détection (3) comprend un dispositif de guidage de la lumière (20).

17. Système de mesure d'absorption modulaire selon l'une des revendications 1 à 16, **caractérisé en ce que** le module d'échantillon (3) et/ou le module de détection (2) comprennent un dispositif de logement par liaison de force et/ou à complémentarité de forme.
